# EUROPÄISCHE PATENTANMELDUNG

(11) **EP 2 502 609 A1**
(43) Veröffentlichungstag der Anmeldung: **26.09.2012**
(21) Anmeldenummer: 11075053.6
(22) Anmeldetag: 20.03.2011
(51) Int. Cl.: A61G 3/06, B65G 69/30

(54) **Einrichtung zur Fixierung mobiler Rampen in Fahrzeugen**

(71) Anmelder: Wagner, Reiner, 10365 Berlin (DE)
(72) Erfinder: Wagner, Reiner, 10365 Berlin (DE)

(57) **Zusammenfassung**

Es wird eine Einrichtung zur Fixierung mobiler Rampen **9** in Fahrzeugen beschrieben, die aus einer im Fahrzeugboden **6** eingelassenen speziell geformten Bodentassen **1** und einer speziell geformten Einhangeinrichtung **4** besteht, und dadurch gekennzeichnet ist, dass die Einhangeinrichtung **4** eine speziell geformte Wulst **5** besitzt, die sich im Belastungsfall hinter dem Bodentassen-Oberteil **2** verklemmt und dadurch ein Herausspringen während des Auffahrens des Rollstuhles verhindert.

## Beschreibung

Die Erfindung betrifft eine Einrichtung zur sicheren Fixierung mobiler Rampen in Fahrzeugen während der Benutzung der Rampe.

In der TSI PRM (technische Spezifkation für die Interoperabilität people reduced mobility) bezüglich "eingeschränkt mobiler Personen" im konventionellen transeuropäischen Eisenbahnsystem und im transeuropäischen Hochgeschwindigkeitsbahnsystem vom 07.03.2008 wird unter dem Punkt "4.2.2.12.3.6. Spezifische Anforderungen für mobile Rampen" im Abschnitt "Anforderungen an die Interoperabilitätskomponenten" gefordert: "Während die Rampe zum Ein- oder Aussteigen verwendet wird, ist sie so zu sichern, dass sie sich beim Be- oder Entlasten nicht verschieben kann". Ein einfaches "Hinlegen" der Rampe ist damit nicht mehr erlaubt.

Die Gefahr des Verrutschens der mobilen Rampe ohne Fixierungseinrichtung wird durch die Antriebsräder des auffahrenden bzw. abfahrenden Rollstuhles verursacht. Das Drehmoment des Rades wird auf die Rampe als längs der Rampe wirkende Kraft übertragen, die die Rampe im ungünstigsten Falle wie eine Lanze "wegschießt". Der dadurch entstehende instabile Zustand kann eine sehr große Gefahr für den in seiner Reaktionsfähigkeit und -möglichkeit eingeschränkten Rollstuhlinsassen werden.

Es werden verschiedene Lösungen zur Fixierung angeboten.
Z. B. werden an ein Ende der Rampe lange Stifte eingesetzt, die in runde, ovale oder längliche Vertiefungen im Fahrzeugboden eingesteckt werden. Diese Lösungen haben die Nachteile, dass (a) die Stifte relativ lang sein müssen, um ein Herausspringen während des Auffahrvorganges zu verhindern, (b) der Fahrzeugboden in der Regel nicht dick genug ist, so dass die Einstecköffnungen nach unten offen sind und damit einen unerwünschten Zugang für Wasser und Schmutz ermöglichen, (c) bei unten geschlossenen Öffnungen sich Schmutz in den Öffnungen festsetzt und dieser im normalen Reinigungsprozess mit einem Besen nicht entfernt wird, so dass diese Öffnung nicht mehr verwendbar ist, und (d) beim Aufnehmen der Rampe sich die langen Stifte in der Öffnung verklemmen und verbiegen und damit die Zeit für den Abbau der Rampe verlängern. Unter dem Aspekt, dass die Haltezeit z. B. eines Regionalzuges im Schnitt auf 30 Sekunden kalkuliert ist, spielt der Faktor Zeit auch eine wesentliche Rolle.

Eine weitere Variante zur Fixierung der mobilen Rampe besteht in einem länglichen Schlitz auf dem Fahrzeugboden und einer senkrecht an der Rampe angebrachten Schiene. Auch hier können alle unter [0004] genannten Nachteile genannt werden.

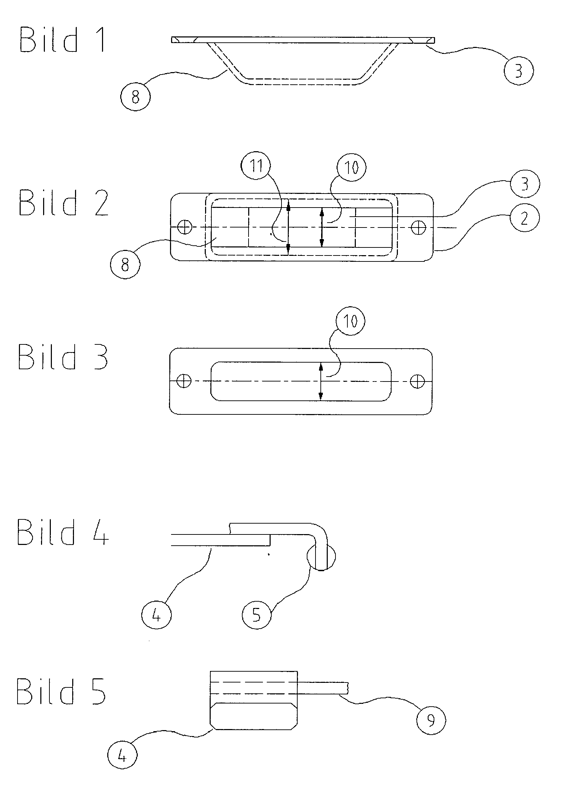

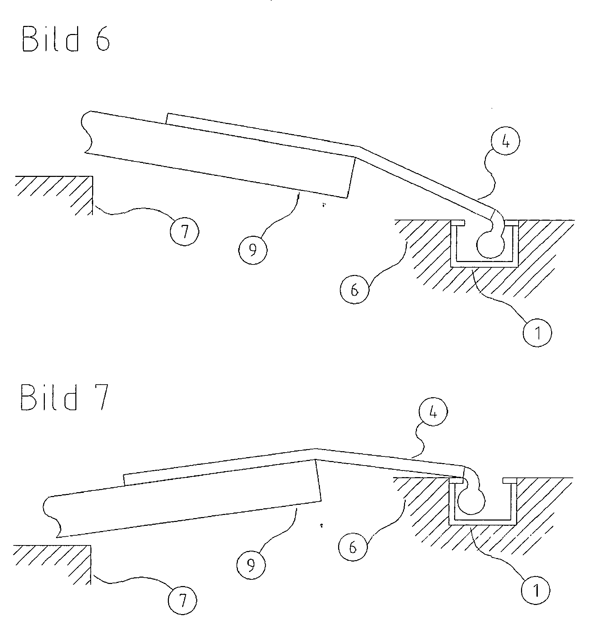

Die hier vorgestellte Einrichtung besteht aus einer speziell ausgeformten Bodentasse 1 gemäß Bild 1-3, bestehend jeweils aus dem Bodentassen-Unterteil **3** und dem Bodentassen-Oberteil **2**, die in den Fahrzeugboden **6** gemäß Bild 6 und 7 eingelassen wird , und einer speziell geformten Einhangeinrichtung **4** gemäß Bild 4 und 5, die paarweise an der Rampe **9** angebracht sind.

An der Einhangeinrichtung **4** befindet sich am Ende eine im Querschnitt ovale Wulst **5**. Wenn im Belastungsfall die Rampe **9** durch die angetriebenen Räder eines auffahrenden Rollstuhls in Längsrichtung verschoben wird, verhakt sich die Wulst **5** hinter dem Bodentassen-Oberteil **2**, wodurch ein Herausrutschen der Einhangeinrichtung **4** aus der Vertiefung nicht mehr möglich ist. Damit ist eine Fixierung gegeben. Diese trifft für jeden Belastungsfall zu, d. h. sowohl für das Auffahren des Rollstuhles von der Bahnsteigebene **7** auf die Rampe **9** als auch für das Abfahren des Rollstuhles von der Rampe **9** auf den Fahrzeugboden **6** im Fahrzeug, und natürlich auch für die umgekehrte Fahrtrichtung. Dabei ist es gleichgültig ob die Bahnsteigebene **7** niedriger als der Fahrzeugboden **6**, oder die Bahnsteigebene **7** höher als der Fahrzeugboden **6** ist.

Die Schmalseite **8** des Bodentassen-Unterteils **3** ist schräg ausgeführt (vorteilhaft 45°). Dadurch kann durch Fegen in Längsrichtung die Bodentasse **1** im üblichen Reinigungsprozess mit gereinigt werden.

### [Bezugszeichenliste]

- 1: Bodentasse
- 2: Bodentasse - Oberteil
- 3: Bodentasse - Unterteil
- 4: Einhangeinrichtung
- 5: Wulst an Einhangeinrichtung
- 6: Fahrzeugboden
- 7: Bahnsteigebene
- 8: Bodentasse-Unterteil, Schmalseite
- 9: Rampe
- 10: Breite des Bodentassen-Oberteiles
- 11: Breite des Bodentassen-Unterteiles

### [Anlage-Bilder]

- 1: Bodentasse, Unterteil (Seitenansicht)
- 2: Bodentasse, Unterteil und Oberteil (Draufsicht)
- 3: Bodentasse, Oberteil (Draufsicht
- 4: Einhangeinrichtung, Seitenansicht und Vorderansicht
- 5: Funktion Einhangeinrichtung, Bahnsteig höher als Fahrzeugebene
- 6: Funktion Einhangeinrichtung, Bahnsteig niedriger als Fahrzeugebene

## Patentansprüche

1. Einrichtung zur Fixierung von Rollstuhlrampen in Fahrzeugen, bestehend aus einer Bodentasse **1** zum Einbau in den Fußboden des Fahrzeuges und einer Einhangeinrichtung **4** zum Anbauen an eine Rollstuhlrampe **9**.

2. Einrichtung zur Fixierung von Rollstuhlrampen in Fahrzeugen gemäß Anspruch 1 mit der Einhangeinrichtung **4 gekennzeichnet dadurch, dass** am Ende der Einhangeinrichtung **4** sich eine Wulst **5** befindet.

3. Einrichtung zur Fixierung von Rollstuhlrampen in Fahrzeugen gemäß Anspruch **1** mit der Bodentasse **1 gekennzeichnet dadurch, dass** die Breite **11** des Bodentassen-Unterteils **3** größer als die Breite **10** der Öffnung in dem Bodentassen-Oberteil **2** ist.
